# EUROPEAN PATENT APPLICATION

(11) **EP 2 236 309 A2**
(43) Date of publication of application: **06.10.2010**
(21) Application number: 09169908.2
(22) Date of filing: 10.09.2009
(51) Int. Cl.: B42C 9/00, B42D 1/08

(54) **Apparatus for fixing sheets of photographic material.**

(30) Priority: 19.09.2008 IT BO20080574
(71) Applicant: Polielettronica S.p.A., 45030 Occhiobello (RO) (IT)
(72) Inventor: Poli, Bruno, 45030 Occhiobello (Rovigo) (IT)
(74) Representative: Fanzini, Valeriano

(57) **Abstract**

An apparatus for fixing sheets (11) of photographic material or the like to each other, in particular photographic paper, comprises means designed to glue together, back-to-back, respective sheets of material (11, 11), operating at ambient temperature.

## Description

This invention relates to an apparatus for fixing sheets of photographic material or the like to each other.

There is a prior art apparatus for fixing sheets of photographic paper to each other, the sheets having one face on which a photographic image is printed and another face or back on which there is no image, the sheets being glued together with a sheet of paper material interposed between them.

However, in that way as well as using an excessive amount of material, the photographs obtained with images on the front and back, in particular for making photograph albums, are too thick, meaning that the end product (the photograph album) is unattractive and too bulky, therefore, not greatly appreciated by consumers.

Moreover, in the known way, said photograph albums are made using glue which is applied hot and damages or greatly risks damaging the photographic image reproduced on the photographic sheets to be glued.

In the known way, to facilitate gluing, the stacked and glued sheets of material are compressed in a suitable press in which the sheets are supported on a fixed supporting surface, separate from the gluing machine and requiring unwanted use of manpower for its implementation.

It is thus provided an apparatus for fixing sheets of photographic material or the like to each other, in particular in the form of sheets of photographic paper, having one face on which a photographic image or the like is printed, and another face or back on which there is no image; the apparatus being **characterised in that** it comprises means designed to glue together, back-to-back, respective sheets of material.

In this way it is possible to avoid the use of excess material and the sheets which are glued together have a reduced overall thickness.

These and other features of the apparatus are clearly described in the claims below, and its advantages are more apparent from the detailed description which follows, with reference to the accompanying drawings which illustrate several preferred embodiments provided merely by way of example without restricting the scope of the inventive concept, and in which:
- Figure 1 is a perspective view of a first preferred embodiment of an apparatus made according to this invention;
- Figure 2A is a perspective view of the end part of the first embodiment of the apparatus, in particular reproducing a photograph album obtained using this apparatus;
- Figure 2B is a schematic side view of a sheet of photographic paper used in the first embodiment of the apparatus;
- Figure 3A is a schematic side view of the inner part of the first preferred embodiment of the apparatus;
- Figure 3B shows a detail of Figure 3A, relative to the zone for dispensing and distributing the adhesive on the respective sheet of material;
- Figure 3C is a schematic side view similar to that of Figure 3A, in a condition in which the feed means are operating, engaging with the means for distributing the adhesive on the sheet of material;
- Figure 4 is a perspective schematic view of the zone for gluing the sheets to each other of the first preferred embodiment of the apparatus;
- Figures 5 and 7 are perspective schematic views of the part of the apparatus illustrated in Figure 4, in different operating conditions;
- Figure 8 is an exploded perspective view of a detail relating to the means for distributing the adhesive, according to a respective preferred embodiment;
- Figure 9 is an exploded perspective view of a detail relating to the supporting surface for the glued sheets and means for compressing them;
- Figure 10 is a schematic side view of the means for compressing the glued sheets, acting on the folded edge of the sheets;
- Figure 11 is a schematic front view relating only to the supporting block of the means for engaging with the rear edge of the glued sheets;
- Figure 12 is a schematic side view only of the block for compressing the rear edge of the glued sheets;
- Figure 13 is a schematic side view only of the cam for engaging with and releasing the elements for compressing the rear edge of the glued sheets;
- Figure 14 is a perspective view of a second preferred embodiment of an apparatus made according to this invention;
- Figure 15 is a schematic side view of the inner part of the second preferred embodiment of an apparatus made according to this invention;
- Figure 16 is a perspective view of a detail relating to a second embodiment of the means for distributing the adhesive;
- Figure 17 is a schematic side view of a second preferred embodiment of the means designed to keep the sheets compressed at the front edge, or the free edge;
- Figure 18 is a schematic side view of a third preferred embodiment of the means designed to keep the sheets compressed at the front edge, or the free edge;
- Figure 19 is a perspective cutaway view of a detail of the means for controlling the suction used to retain the sheet of photographic material.

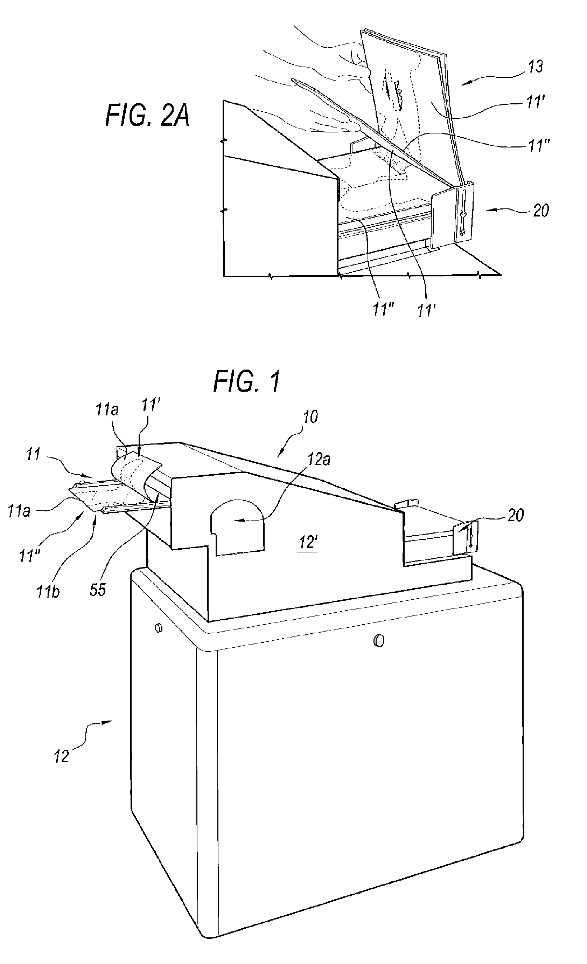

Figure 1 shows a first preferred embodiment 10 of an apparatus for fixing sheets 11 of photographic material or the like to each other, in particular sheets of photographic paper having one face 11a on which a photographic image or the like is printed and another face or back 11b on which there is no image.

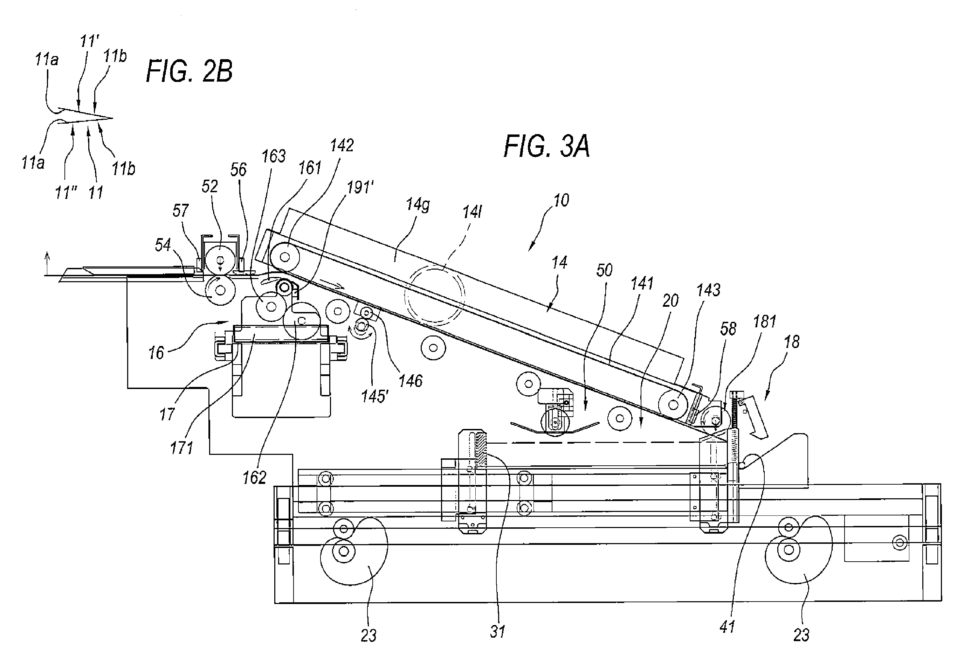

As may also be inferred with reference to subsequent figures, advantageously, this apparatus comprises means designed to directly glue together, back-to-back, respective sheets of material 11, 11, and, in particular, designed to glue together, back-to-back, respective opposite portions 11', 11" of corresponding sheets 11, 11 of material folded in a "V" shape, as illustrated in Figure 2B, to make a photograph album 13, of the type illustrated in Figure 2A.

However, it shall be understood that this first preferred embodiment of the apparatus, although particularly suitable for gluing sheets which are folded in a "V" shape, would also, like the second preferred embodiment described below, be suitable for connecting two flat sheets of photographic material back-to-back, forming a single element with images on the front and back.

Advantageously, the means for gluing the respective sheets 11, 11 of material to each other back-to-back operate at ambient temperature, or cold. This overcomes any risk of damaging the photographic image.

Moreover, this apparatus uses a layer of adhesive, or glue, of limited thickness, as will become clearer as this description continues.

For this purpose, an adhesive is used which has adhesive properties at ambient temperature, or cold, and preferably within a temperature range of 10° to 40°C, particularly within a temperature range of 16° to 38°C.

As may also be inferred from the following description, the adhesive is distributed in the form of a single uniform layer on the corresponding face of the sheet of photographic material. Said layer of adhesive has limited thickness, preferably between 10 and 20 microns.

In more detail, as shown in Figure 1, this apparatus comprises a framework 12, comprising an outer cover or shell, forming supporting means for the means used to glue the sheets of material 11, 11 to each other back-to-back, the gluing means in turn comprising, as shown in Figure 3A, means 14 for feeding the sheets 11 of material, means 16 for distributing an adhesive or glue on a corresponding face 11b - in particular of a portion 11" - of a sheet of material 11, and means 18 for compressing the face 11b with the adhesive against an opposite face 11b, in particular of a respective portion 11', of an opposite sheet of material 11.

In practice, advantageously, the compressing means comprise a rotary compression roller 181, which engages with a corresponding face 11b of the folded upper portion 11' of the sheet of material 11, pushing the back face 11b of the lower portion 11" of the sheet 11 against the upper face 11b of the upper folded portion 11' of an opposite sheet 11, already placed on the supporting means 20 for the sheets 11 already glued, and described in more detail below.

In practice, the compression roller 181 engages with a portion 11' of a sheet of material folded in a "V" shape, to push a second portion 11" of the same sheet of material on which the adhesive is present against a corresponding upper face of an opposite sheet of material 11 below it.

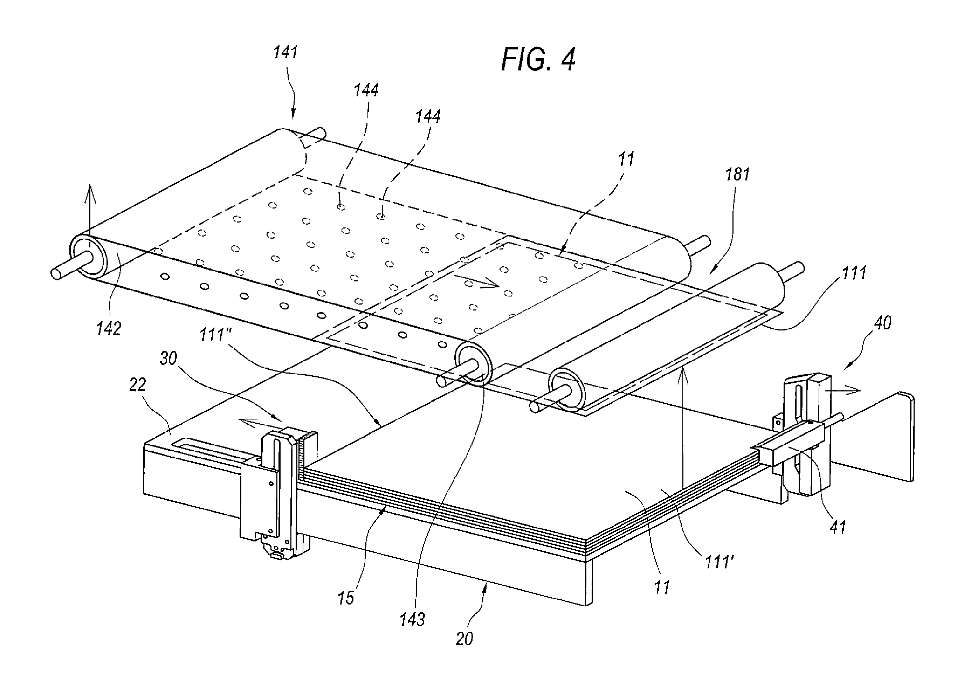

Advantageously, as indicated, this apparatus also comprises means 20 for housing sheets of material in the glued condition, that is to say, fixed to each other, better illustrated with reference to Figures 4 to 7, which also form opposing means for the compression or calendering roller 181.

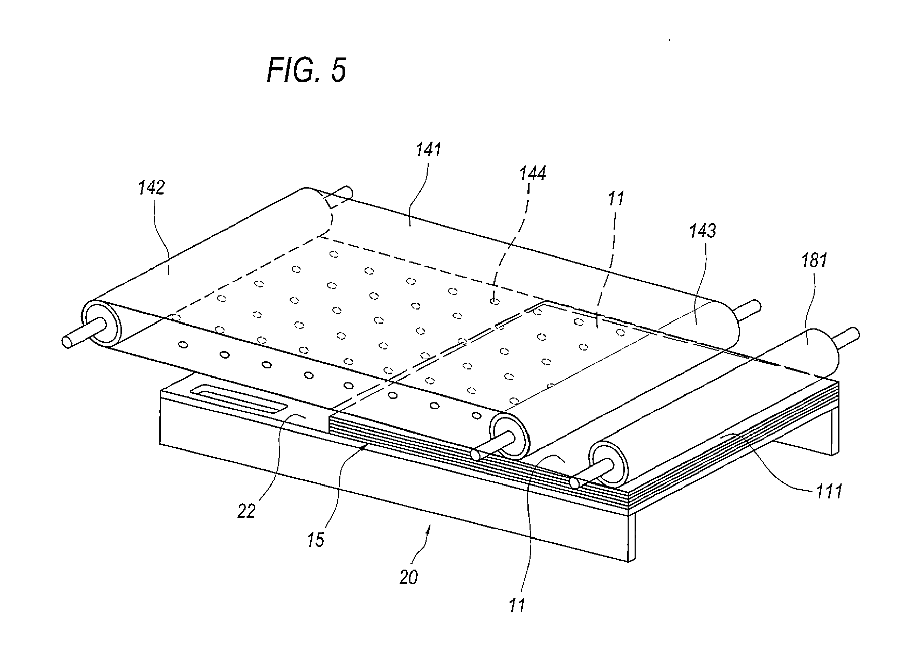

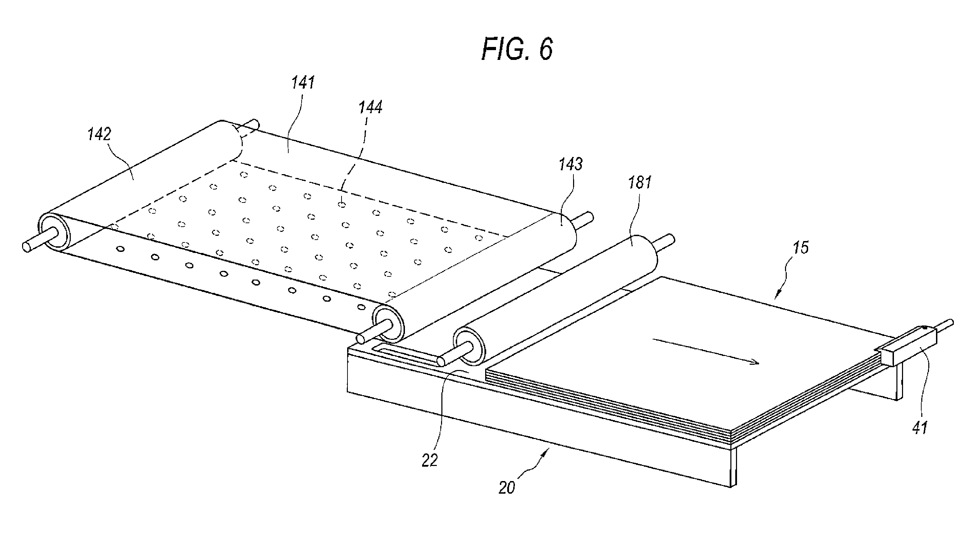

As illustrated, the means 20 for housing sheets in the glued condition comprise a horizontal lower supporting surface 22 for the sheets of material 11 which can move between a retracted position, shown in Figure 5, for receiving a first end 111 of the sheet folded in a "V" shape, and a forward position, illustrated in Figure 6, in which the sheet 11 being fed forward and which is glued to the top sheet in the stack of sheets 15 supported on the means 20, has been completely released and moved away from interference with the compressing or calendering means 181.

Moreover, the means 20 for housing sheets in the glued condition can move between a lowered position, illustrated in Figure 4, and a raised position for engaging the upper sheet 11 in the stack of sheets 15, against a corresponding sheet 11 located below the compression roller 181, as illustrated in Figure 5.

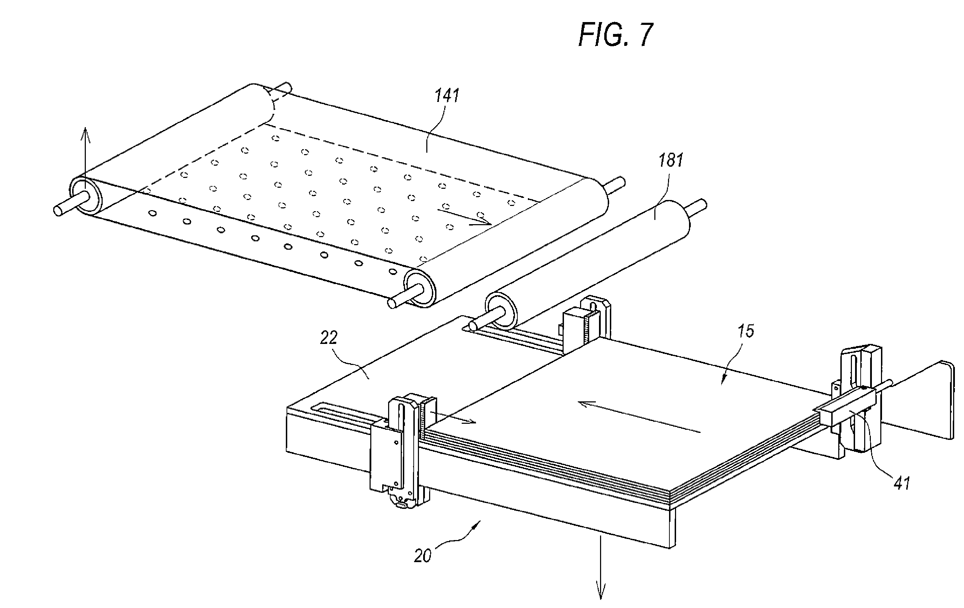

Moreover, the means 20 for housing stacked sheets of materials can move between a raised position with the housing carriage 20 in the forward position, and a lowered position, starting from which the carriage 20 follows the return path from the forward position, as shown in Figure 7, to the back position, repositioning itself in the lowered position, illustrated in Figure 4.

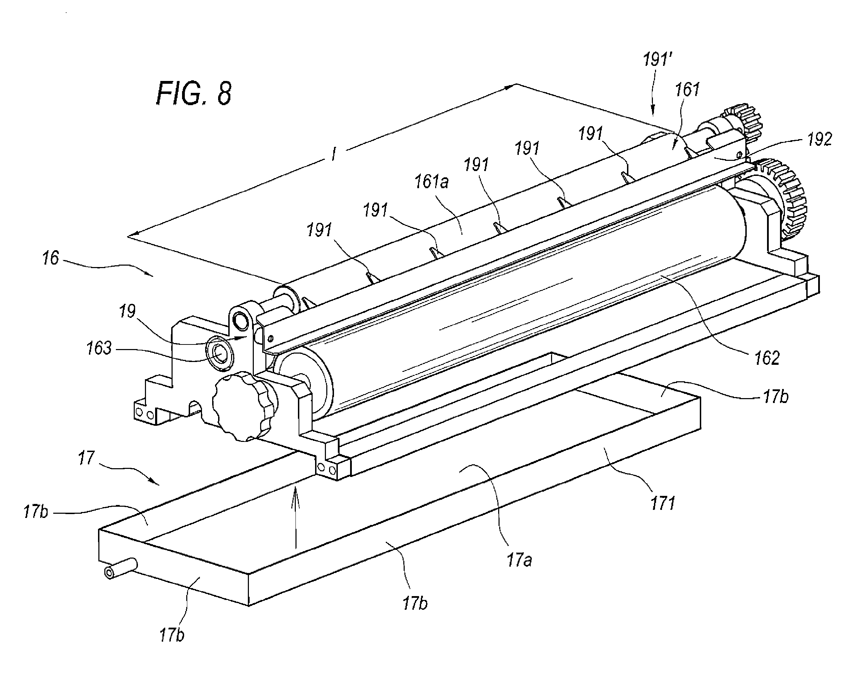

As may also be inferred with reference to Figure 8, the means 16 for distributing the adhesive or glue comprise a roller 161 having a cylindrical outer surface 161a, designed to make contact with the respective face 11b of the sheet of material 11, for transferring to it a thin layer of adhesive present on the outer surface 161a of the rotary roller 161.

As illustrated, there are also means 17 for housing the adhesive, comprising a container or tank 171 which may advantageously be removed to allow refilling with adhesive and may be removed from the apparatus for cleaning the inside of the tank 171 to get rid of any glue residue, for example using suitable solvents.

As illustrated, the means 17 for housing the adhesive in the form of a tank are open at the top and comprise a bottom wall and a plurality of short lateral outer walls 17b.

The adhesive housing means 17 are supported on a small frame 19 which supports the adhesive distribution means.

The tank 171 is removably supported by the same small frame 19 like the adhesive distribution means.

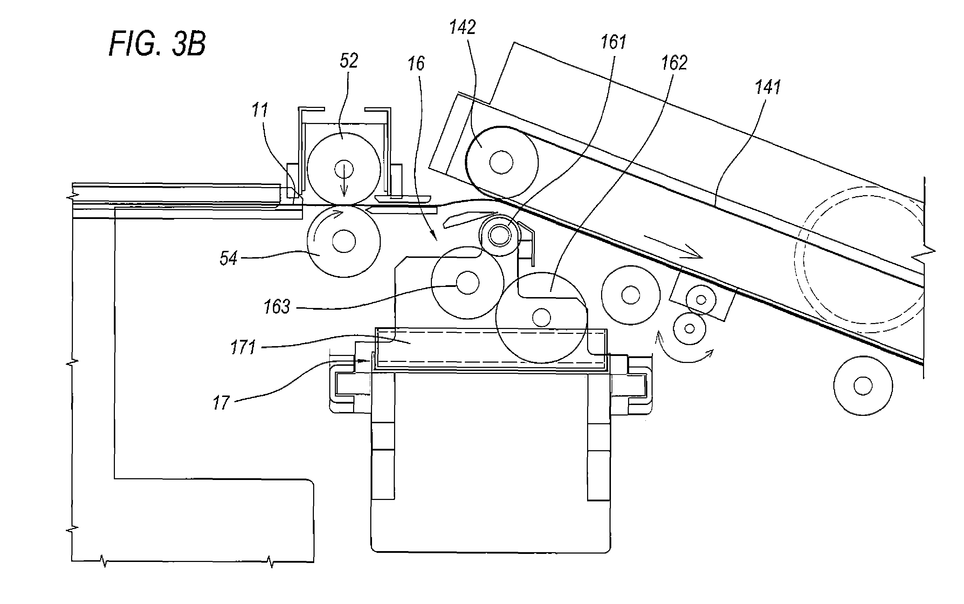

As illustrated, the adhesive distribution means also comprise an adhesive pick-up roller 162 which takes the adhesive from the housing tank 171, said roller having an outer surface which is inserted in the tank until it almost reaches the bottom. There is also an intermediate rubber-coated roller 163, between the pick-up roller 162 and the adhesive distribution roller 161. Said intermediate roller 163, as Figure 3B clearly shows, has a cylindrical outer surface in contact with the cylindrical surfaces of the rollers 161, 162 for transferring the adhesive between them.

In practice, both the adhesive distribution means and the adhesive housing tank are removably supported by the apparatus framework.

Advantageously, the roller 161 for distributing adhesive on the photographic material 11 has a width '1', which is less than the width of the sheet of material 11, so that no glue is distributed on the lateral edges of the sheet, and so that, during the subsequent calendering or compression operation, of the sheet 11 against the sheet 11 below, no adhesive comes out of the side of the sheets 11, 11 glued together.

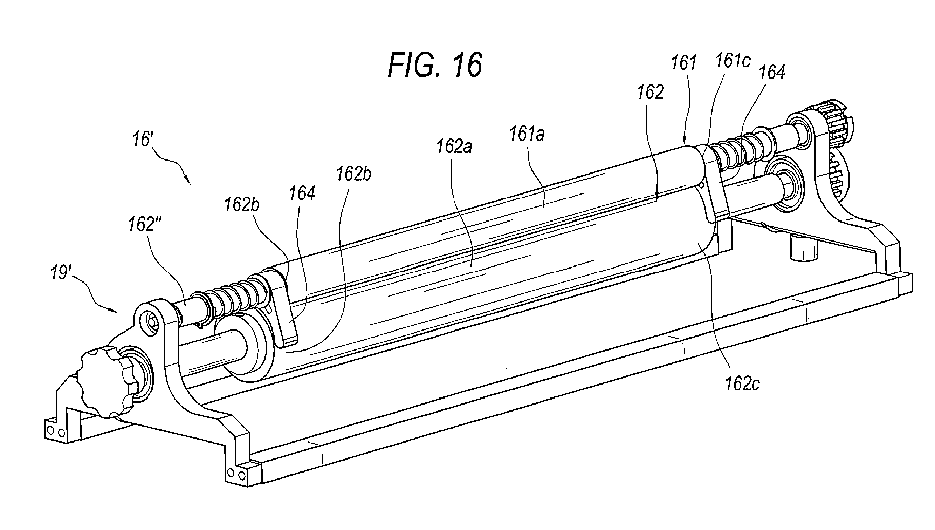

A second embodiment 16' of the adhesive distribution means comprises, like the first embodiment and as may be inferred from Figure 16, a roller 161 having a cylindrical outer surface 161a designed to make contact with the respective face 11b of the sheet of material 11, for transferring to the latter a thin layer of adhesive present on the outer surface 161a of the rotary roller 161, the dispensing roller 161 being supported on a respective small frame 19', similar to that of the first preferred embodiment, to which adhesive housing means (not illustrated) are connected which may also be the same as the adhesive housing means 17 of the previous embodiment.

Moreover, in this second embodiment 16' of the adhesive distribution means an adhesive pick-up roller 162 is also used, taking the adhesive from the housing tank, the pick-up roller having an outer surface 162a which is inserted in the tank until it is close to the bottom, and which is directly in contact with the cylindrical surface 161a of the roller 161 for transferring the adhesive to it.

Moreover, labelled 164, 164, the means comprise scrapers, supported in such a way that they rotate freely on the shaft 161" of the first roller 161, at the sides 161b, 161c of the distribution surface 161a and engaging with corresponding lateral portions 162b, 162c of the adhesive pick-up roller 162, for eliminating any excessive build up of adhesive at the lateral portions 162b, 162c of the pick-up roller. In practice, means 164, 164 are thus provided for eliminating any excess build up of adhesive at the lateral portions 162b, 162c of the adhesive pick-up roller 162.

As may be inferred from Figure 1, the framework 12 has a lateral opening 12a suitable for allowing removal of the liquid adhesive housing tank 171, for refilling and for its complete removal and cleaning, or if necessary for substitution with a new tank.

Moreover, said opening 12a, made in the lateral wall 12' of the framework or cover 12, can also be used to remove the small frame 19 supporting the rollers for distributing a thin layer of glue on the corresponding face of the sheet 11 of photographic material, thus allowing removal of the rollers 161, 162, 163 and their cleaning if necessary.

In turn, the means 14 for feeding the sheet of photographic material comprise a rotary suction belt 141, more clearly illustrated in Figures 4 to 6, driven on respective end rollers 142, 143 and having respective holes 144 forming retaining means for the photographic material 11, connected to a source of suction, not illustrated in the accompanying drawings.

Between the rollers 142, 143 the suction belt 141 comprises a photographic material feed stretch forming a mobile supporting and feed surface for the photographic material 11.

As illustrated, the suction belt 141 is housed in a containment case 14g, open at the bottom, allowing the lower surface of the belt to engage with the sheet of photographic material, the housing case 14g having a lateral opening 141 connected to the suction means, for obtaining a suction flow on the surface 141 for supporting and feeding the sheet of photographic material 11.

The feed belt 141 also forms means for pushing the sheet of material 11 against the adhesive distribution means 161.

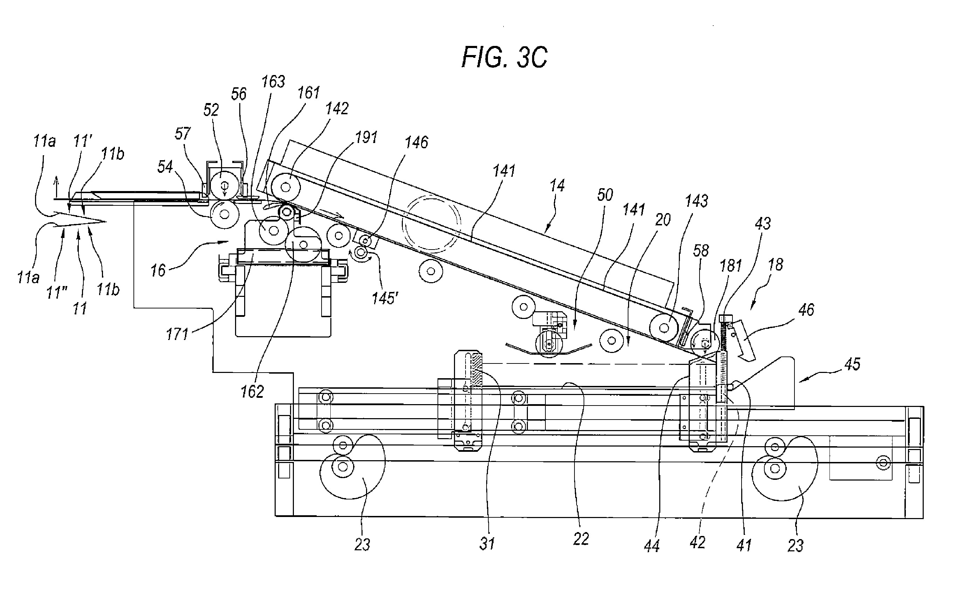

In particular, the suction belt 141 has an upstream end which, as shown in Figures 3A and 3C, can move from a position in which the sheet of material 11 does not engage with the distribution roller 161, the sheet of material 11 thus being fed freely - without the sheet picking up adhesive - to a position in which the sheet of material 11 engages with the distribution roller 161, allowing the adhesive to pass from the distribution roller 161 to the sheet of photographic material 11, as illustrated in Figure 3C.

In practice, as described in more detail below, at the start of the procedure for making the photograph album, the first sheet 11, fed by the feed means 141, does not pick up glue and reaches the housing means 20 in this adhesive-free state thanks to the fact that the end 141 of the feed roller is in the raised condition, as Figures 3A and 3B clearly show.

Starting with the second sheet 11 of the plurality of sheets designed to form the photograph album 13, the feed means 141 are lowered, bringing the end 142 into contact with the respective adhesive distribution roller 161, with the sheet 11 interposed between them, thus promoting the passage of adhesive to the corresponding face 11b of the portion 11" of the sheet 11.

Moreover, a front longitudinal end and a rear longitudinal end of the respective sheet 11 being fed do not have adhesive distributed on them, so that during the subsequent calendering step no adhesive comes out of the opposite longitudinal ends of the glued sheets.

For this purpose, the means 141 are lowered so that the sheet 11 is brought into contact with the distribution roller 161 only after an initial or downstream stretch of the sheet 11 has already passed the zone for engagement with the roller 161, and the means are raised just before the final, or upstream part of the sheet 11 reaches the distribution means 161.

The movement to lower and lift the upstream end 142 of the rotary conveyor belt 141 is achieved thanks to angular rotation of the entire belt 141 relative to its downstream end 143.

Angular rotation of the feed means 141 is achieved thanks to a rotary cam 145', integral with the framework, operating in conjunction with a suitable wheel 146 integral with the tilting structure 149 supporting the suction belt 141.

There are also means 191 for detaching the sheet of material from the distribution roller 161.

As shown in Figure 8, these means for detaching the sheet of material are in the form of a comb element 191' comprising a transversal main body 192, located downstream of the distribution roller 161, from the rear of which there extends a plurality of longitudinal prongs 191, the latter having a respective end extending close to the roller 161.

In practice, the comb prongs 191 detach the sheet 11, compressed between the feed means 141 and the adhesive distribution roller 161, preventing it from adhering to the distribution roller 161 and being pulled by the latter and detached from the feed means 141.

As illustrated in Figure 3A, the numeral 50 denotes an end of stroke sensor designed to interrupt carriage 20 lifting and which is engaged by the upper face of the stack of sheets 15 supported on the carriage 20.

The numerals 52, 54 also denote means for feeding the sheet 11 towards the feed means 44 and towards the adhesive distribution means 161.

These feed means 52, 54 are positioned just downstream of a front opening 55 into which the new sheet 11 to be glued is inserted and which is clearly illustrated in Figure 1.

Advantageously, there are also means designed to keep the glued sheets 11 under pressure while they are on the housing means 20.

To prevent unpleasant and unwanted spring-back by the glued material, according to a particularly advantageous aspect of this apparatus, the glued sheets 11 are kept compressed when the calendering and gluing of new sheets of material are not in progress and in particular when the carriage 20 is in the lowered and back position shown in Figure 4. In particular, as soon as the carriage, or mobile support 20 starts the upstroke, from the position shown in Figure 4, the means for keeping the sheets 11 compressed come out of the condition in which they engage with and compress the sheets on the means 20, returning to that engaging and compressing action as soon as the carriage 20 has completed the cycle for gluing a new sheet 11 to the top sheet in the stack of sheets 15 housed on the means 20 and the carriage 20 has returned to the lowered and back starting position.

Advantageously, there are means 40 designed to compress the front edge, or folded edge 111' of the glued sheets 15.

Advantageously, there are also means 30 designed to keep the sheets 11 compressed at the rear edge, or free edge 111" of the glued sheets 15.

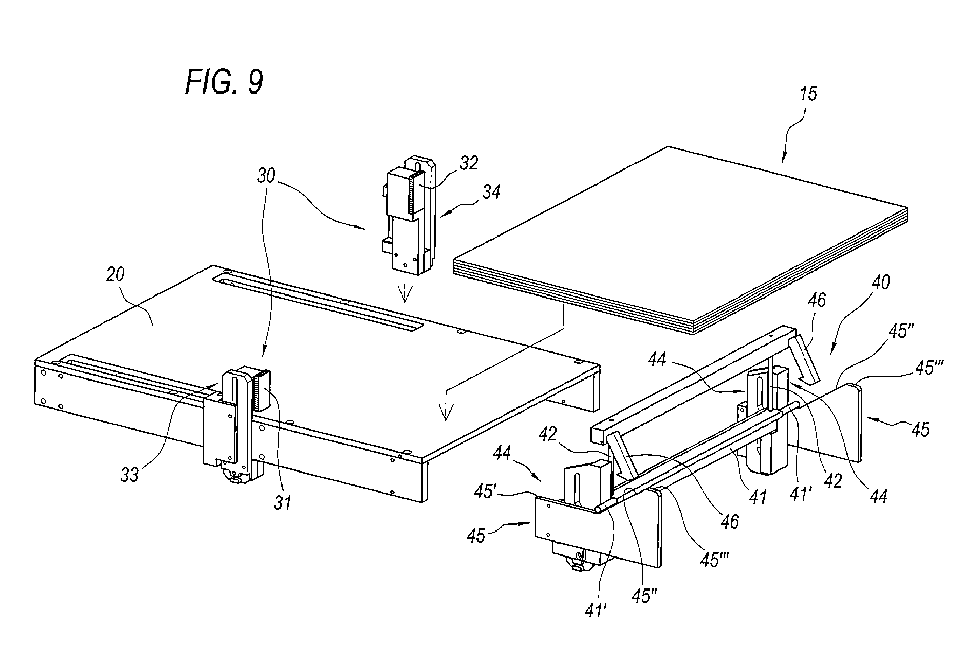

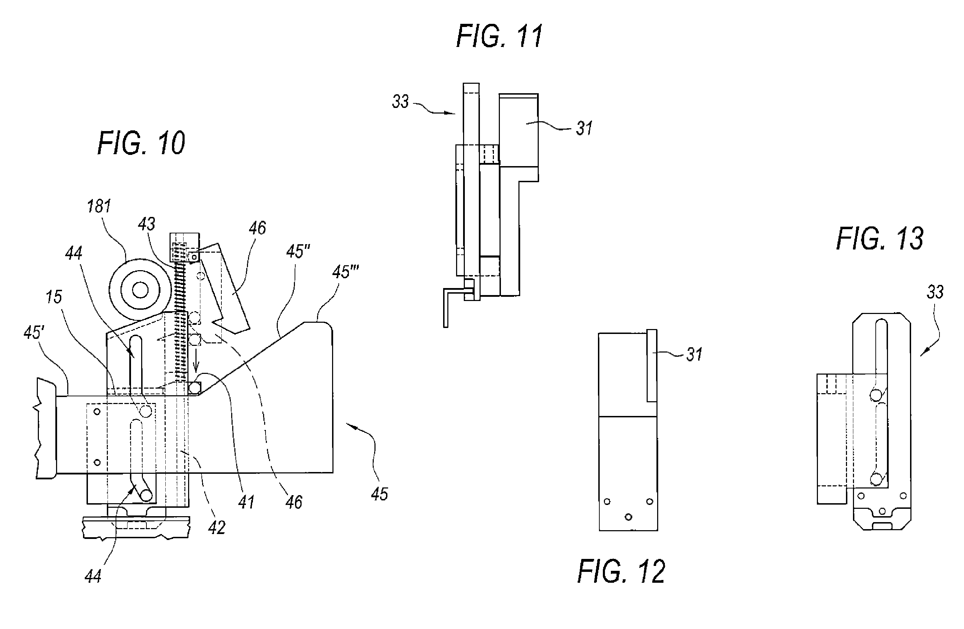

As may be inferred from Figures 9 and 10, in practice, the means 40 designed to keep the sheets compressed on the downstream, or front, or folded edge 111' comprise a transversal presser 41 on which actuator means operate and which, in particular, can slide on corresponding vertical rods 42, 42, only one of which is illustrated in the side view in Figure 10, and which is held in its compressing position by corresponding springs 43 mounted coaxially on the rods 42.

The way in which these compression means 41 operate is briefly described below. Starting from a lowered position illustrated in Figure 4, the supporting means 20 are raised and, thanks to the cam means 44, are moved backwards, so that the presser 41 comes out of the engagement position and is pushed downwards by the respective springs 43 into contact with the upper edge 45' of the rear part of the additional lifting cam means 45.

With the subsequent step of longitudinally feeding the carriage 20, the presser 41 lateral pins 41' run on the oblique edge or stretch 45" of the cam means 44, being raised until they reach an uppermost point 45''', where they are engaged and held in the raised position by the tilting hooks 46.

Once the carriage 20 feed step has ended, with the calendering and joining together of the sheets 11, 11, the carriage 20 is lowered and therefore returns to the back starting position, where the hooking elements 46 are engaged by an opposing element (not illustrated in detail) and rotate, releasing the presser 41 pins 41', 41', the presser thus falling, under the force of the springs 43, onto the corresponding downstream folded edge 111' of the sheets of photographic material 11.

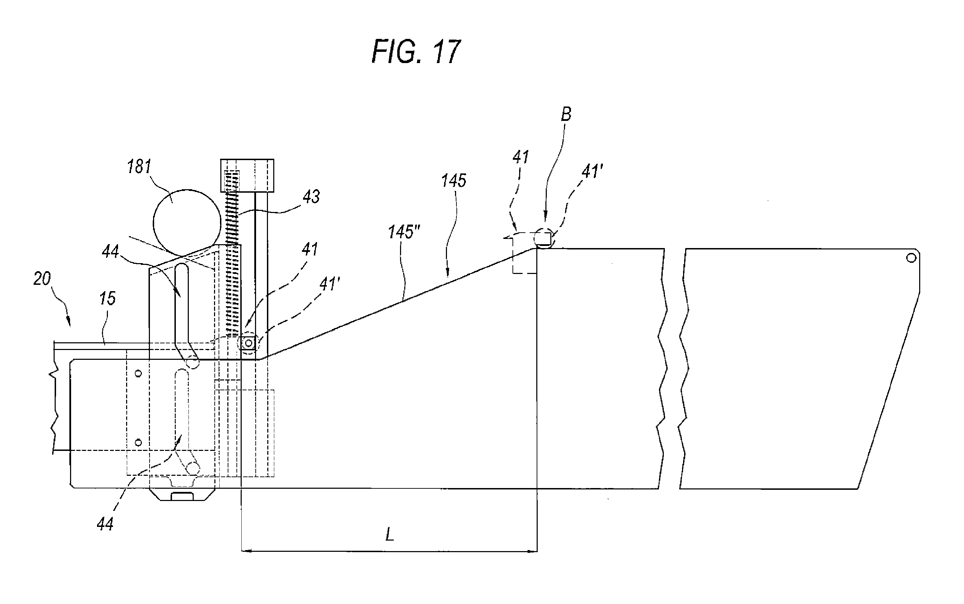

According to a second preferred embodiment of the means for keeping the sheets 11 compressed at the front or folded edge 111' of the glued sheets 15, as illustrated in Figure 17, there are actuator means for the transversal presser 41 which comprise corresponding wheel means 41', able to move on respective cam means 145, their length "L" corresponding to the maximum length allowed for the photograph album. As illustrated, the raising cam means 145 comprise an oblique stretch 145'' extending away from the compression roller 181 and they form means which move, or operate, the presser 41, causing it to be raised to the position B (illustrated with a dashed line) with the carriage 20 in the respective forward position.

Moreover, when the carriage 20 carrying the stack or block of glued sheets 15 returns backwards, the presser 41 is lowered by a force from the springs 43, sliding along the cam 145 until, with the carriage 20 in the retracted and lowered position, it engages with the corresponding upper edge 111' of the block or stack of glued sheets 15.

In this way, it is possible to avoid the use of the hooks 46 for retaining the presser 41 and the presser 41 gently engages with the block of sheets 15, that is to say, without jumps or rebounds.

The other components of this second preferred embodiment of the means for keeping the sheets 11 compressed at the front or folded edge 111' of the glued sheets 15, are the same as those of the first

### preferred embodiment.

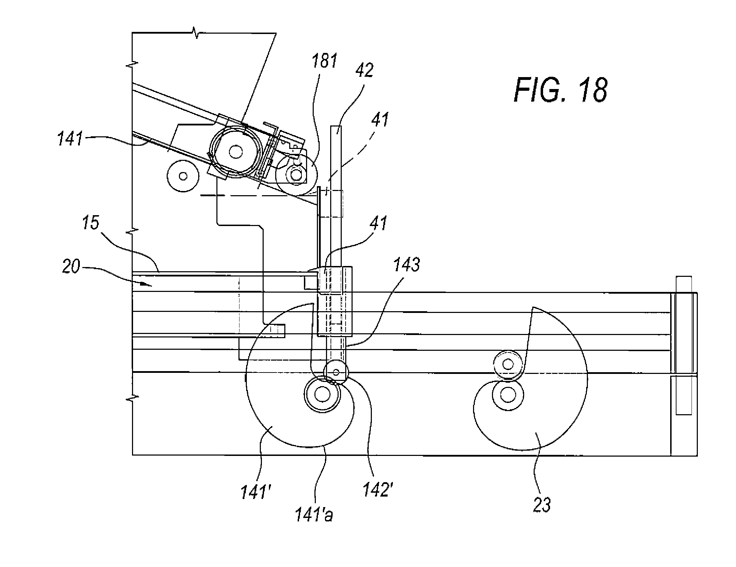

According to a third preferred embodiment of the means designed for keeping the sheets 11 compressed at the front or folded edge 111' of the glued sheets 15, as illustrated in Figure 18, there are motor-driven actuator means for the transversal presser 41. Said presser 41 is controlled by cam means 141' which have a control profile 141'a on which a wheel 142' runs, the wheel being integral with a rod 143'. The rod 143' supports the presser 41 in such a way that it can move vertically.

The cam means 141' are moved by a motor (not illustrated) and form actuator means which, controlled by respective electronic processing means that control the actuator motor, raise the album presser 41, able to slide on the vertical rod 42, above or beyond the point at which the photograph or sheet 11 arrives. The presser 41 is raised in that way just before the photograph or sheet 11 arrives at the point where feed by the suction belt 141 stops. As soon as the surface or carriage 20 supporting the block 15 of sheets has been raised and compresses the album 15 against the photograph or sheet 11 and the latter against the calendering roller 181, the presser 41 is lowered so as to keep the pressure on the downstream edge 111' of the block or stack 15 along the carriage 20 feed path, in particular for the entire carriage 20 feed path. In practice, means are provided for keeping the sheets 11 compressed at the front or free edge 111' of the glued sheets 15. Said means are designed to keep the pressure on the front edge of the stack 15 along the carriage 20 feed path. This allows even thick albums to be made, with a significant reduction in the spring-back by the folded sheets.

In turn, the means for compressing the free or rear edge 111" of the glued sheets comprise a first and a second compression block 31, 32 engaging with opposite lateral edges of the stack of sheets, the blocks 31, 31, connected to the apparatus framework by means of corresponding cam elements 33, 34, being moved when the carriage 20 is raised, thus bringing the elastic or rubber engaging elements 31, 32 into a position in which they release the stack of sheets 15, allowing a new sheet 11 to be placed on the upper face of the stack of sheets 15 positioned on the supporting means 20.

When the carriage 20 returns to the lowered and back position, the engaging and compressing elements 31, 32 return to the condition in which they engage with the top sheet of the stack of sheets 11 supported on the support 20.

In Figure 3A the numeral 56 denotes a sensor or photocell designed to detect the rear edge of the sheet 11, whilst the numeral 57 denotes the sensor or photocell for detecting the presence of a front end of the sheet of material 11.

Moreover, the numeral 58 denotes a sensor or photocell designed to detect the rear edge of the sheet at the outfeed of the feed means 141.

Operation of this apparatus is briefly described below.

As Figure 1 shows, the first sheet 11 of the folded sheets is inserted through the transversal front opening 55 and is gripped by the feed means 52, 54 which send or pass it to the feed means 14, which are in the raised position and transfer the corresponding sheet downstream onto the carriage 22, without supplying adhesive to the first sheet 11.

Similarly, a second sheet 11 and so on for additional sheets, arrives at the feed means 141, which are raised, and which are lowered to allow contact between the sheet 11 and the adhesive distribution roller 161 only after a front edge of the sheet 11 has already passed beyond the point of engagement with the adhesive distribution means 161.

The feed means 14 then convey the sheet downstream and are raised, disengaging from the roller 161, just before the rear edge of the sheet 11 reaches the point of engagement with the distribution means 161.

The feed means 14 then convey the sheet 11 downstream until it reaches the calendering means or compression roller 181.

In this situation, the supporting carriage 20 is raised until it reaches the end of stroke sensor 50. The glued sheet 15 pressing means 31, 32 and 41 located on the carriage 20 disengage from the glued sheets 15 on the supporting means 20.

At this point the carriage 20 is fed forward longitudinally in such a way that the rotary roller 181 compresses the second or next sheet of material 11 against the upper face of the sheet 11 below housed on the carriage 20, that is to say, of the top sheet of the stack of glued sheets 15 resting on the carriage 20, thus calendering the opposite faces of the sheets 11, 11 to be glued.

Once it has reached the forward position and upon completion of calendering of the sheets 11, 11 to be glued to each other, the carriage 20 is lowered then moves back towards the back starting position, where the pressing means 31, 32 and 41 again engage with the upper face of the stack of glued sheets 15 placed on the mobile carriage 22.

The carriage 20 is raised and lowered by corresponding rotary cam means 23, 23, illustrated in Figure 3A.

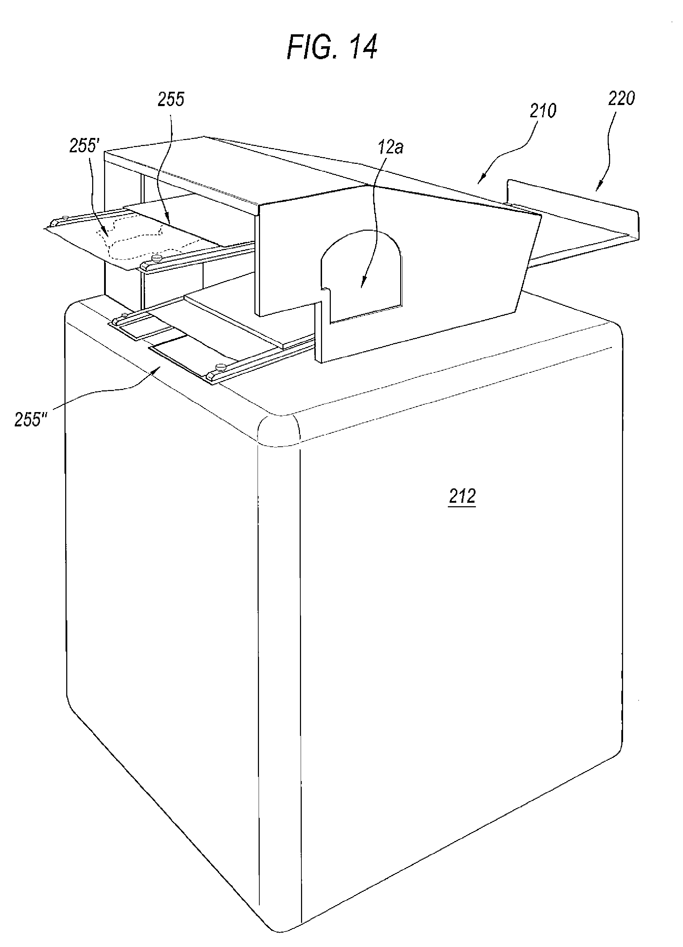

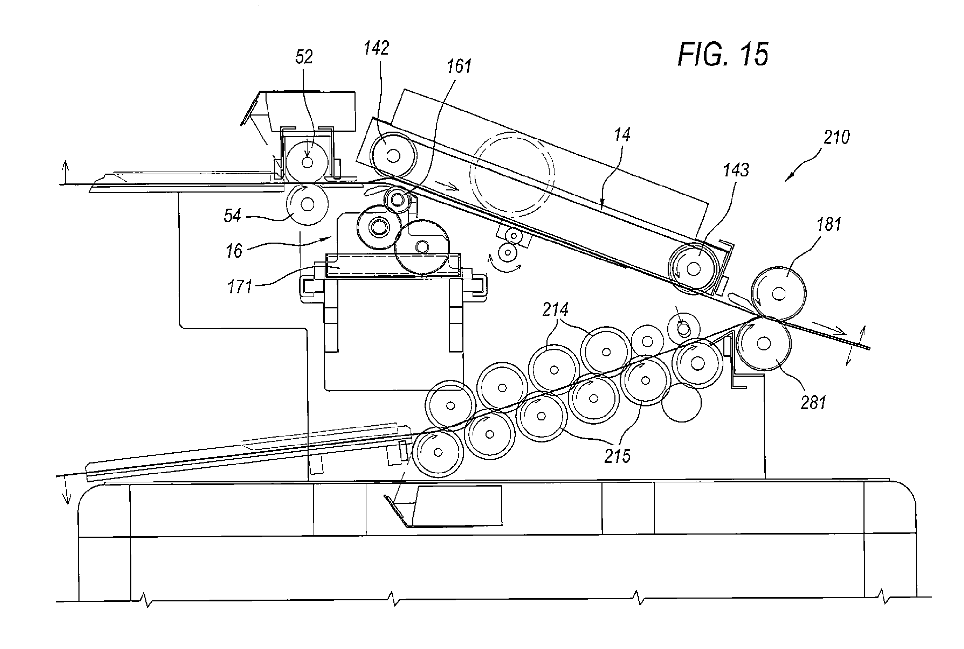

Figures 14 and 15 show a second preferred embodiment 210 of an apparatus for fixing sheets of photographic material to each other.

As illustrated, this second preferred embodiment 210 comprises components like those of the first embodiment, labelled with the same numerals and in any case, to avoid making this description too lengthy, not described in detail again.

This second preferred embodiment 210 of the apparatus comprises a supporting framework 212, like the one in the first embodiment, but having a cover or shell with a large upstream opening 255 designed to accommodate an upper infeed 255' and a lower infeed 255" for feeding in respective sheets of photographic material to be glued to each other back-to-back.

This second embodiment of the apparatus or machine also comprises first and second feed means for respective sheets to be joined to each other. The first feed means 14 are above the second feed means and are the same as the feed means of the first preferred embodiment, therefore they are not described again in detail.

At the first feed means there are means 16 for distributing adhesive on the lower face without an image on it of the respective first sheet of photographic material. Said means are the same as the adhesive distribution means of the first preferred embodiment and are also not described again in detail to avoid making this description too lengthy.

As in the first embodiment, the first feed means convey the first sheet 11 to the calendering roller 181 and an opposite roller 281.

In this second preferred embodiment there are also second means for feeding a second sheet of photographic material, comprising a first and a second plurality of opposite rollers 214, 215 between which the respective sheet of material 11 is conveyed with the face that has no image on it facing upwards. These opposite rollers form an upward path for the sheet 11, conveying the sheet 11 towards the pair of opposite compression or calendering rollers, respectively the upper roller 181, identical to that of the first preferred embodiment, and the lower roller 281 at the end of the upward path of the second sheet 11.

These rollers 181, 281 compress the lower face without an image but coated with adhesive of the upper sheet against the upper face of the lower sheet, making the sheets stick to each other and pushing the sheets which are glued to each other back-to-back onto a corresponding fixed support 220 in the downstream part of the apparatus.

In both of the embodiments described above a bar code or other code reader could be used to guarantee correct gluing of the sheets with the images positioned correctly.

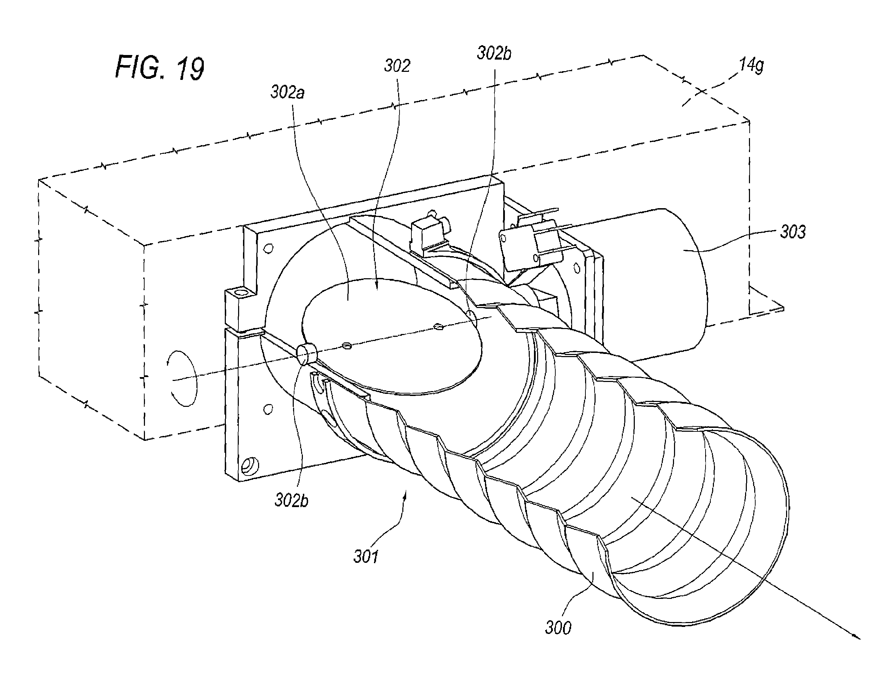

As shown in Figure 19, advantageously, there may also be means 301 for controlling the action to retain the sheet of photographic material, said means in particular being in the form of means designed to control the suction supplied by the suction means 141.

The means 301 for controlling the action to retain the sheet of photographic material control the suction provided by the suction surface 141, and are designed to modulate or vary the retaining force applied to the sheet 11.

Advantageously, the suction surface 141 suction control means 301 comprise, in the suction duct 300 connected to the housing case 14g for the belt 141 forming the mobile suction surface, valve means in particular in the form of a throttle valve 302.

In particular, the valve means 302 comprise a plate 302a from which corresponding coaxial pins 302b, 302b extend. The plate 302a pivots on the pins in the duct 300.

The plate 302a is driven by a motor 303, in particular a stepping motor, suitably controlled by a respective computer.

In practice, the motor 303 makes the plate 302a rotate to position it according to respective angular positions, thus suitably varying the transit opening for the suction flow and, consequently, modulating the retaining or suction force which the surface 141 applies to the respective sheet, in particular according to the different sheet 11 sizes.

Moreover, during the step when the sheet 11 approaches the stop or position marking the end of sheet 11 longitudinal feed, at the calendering roller 181 and in particular just before the sheet touches the stop, the control means make the plate 302 close the suction flow opening to reduce the suction to a low value such that the sheet can slide on the suction surface 141 for a short stretch until it encounters or engages with the stop. This gives sheet positioning at the stop point, that is to say, with the front end of the sheet positioned below the calendering roller 181, which is extremely precise and gives excellent alignment of the sheets in the album block.

This apparatus for gluing together, back-to-back, sheets of photographic material or the like produces a particularly effective connection between the sheets of photographic material.

Moreover, the sheets glued together in this way have significant flexibility and are particularly resistant to moisture.

Moreover, the sheets connected in this way remain glued together even if subjected to unfavourable environmental conditions, in particular if accidentally immersed in water, or if subjected to high temperatures.

The invention described above is susceptible of industrial application and may be modified and adapted in several ways without thereby departing from the scope of the inventive concept. Moreover, all details of the invention may be substituted by technically equivalent elements.

## Claims

1. An apparatus for fixing sheets (11) of photographic material or the like to each other, in particular in the form of sheets of photographic paper, having one face (11a) on which a photographic image or the like is printed, and another face or back (11b) on which there is no image; the apparatus being **characterised in that** it comprises means designed to glue together, back-to-back, respective sheets of material (11, 11).

2. The apparatus according to claim 1, **characterised in that** it comprises means designed to glue together, back-to-back, respective opposite portions (11', 11") of corresponding sheets (11, 11) of material which are folded in a "V" shape to make photograph albums (13).

3. The apparatus according to either of the foregoing claims, **characterised in that** the means designed to glue together, back-to-back, respective sheets (11, 11) of material operate at ambient temperature.

4. The apparatus according to any of the foregoing claims, **characterised in that** it comprises means (14) for feeding the sheets of material (11), means (16) for distributing an adhesive on a corresponding face (11b) of a sheet of material, and means (18) for compressing said face with the adhesive against an opposite face (11b) of a respective sheet of material.

5. The apparatus according to claim 4, **characterised in that** the compression means comprise at least one compression roller (181).

6. The apparatus according to any of the foregoing claims, **characterised in that i**t comprises means (20) for housing the sheets of material in the glued condition.

7. The apparatus according to claim 6, **characterised in that** the means (20) for housing the sheets in the glued condition form opposing means for the compression roller (181).

8. The apparatus according to claim 6 or 7,
**characterised in that** the means (20) for housing the sheets in the glued condition can move between a retracted position and a forward position.

9. The apparatus according to any of the foregoing claims from 6 to 8, **characterised in that** the means (20) for housing the sheets in the glued condition can move between a lowered position and a raised position.

10. The apparatus according to any of the foregoing claims, **characterised in that** the means for housing the sheets of material (11) comprise a supporting surface (20) for the sheets of material.

11. The apparatus according to any of the foregoing claims, **characterised in that** it comprises means (16) for distributing adhesive comprising a roller (161) designed to make contact with a face (11b) of the sheet of material (11).

12. The apparatus according to any of the foregoing claims, **characterised in that** it comprises means for distributing the adhesive which are supported, in a removable way, on the apparatus framework.

13. The apparatus according to any of the foregoing claims, **characterised in that** it comprises means (17) for housing the adhesive which comprise an open-topped tank (171).

14. The apparatus according to any of the foregoing claims, **characterised in that** it comprises means (17) for housing the adhesive which are supported on an adhesive distribution means supporting frame (19).

15. The apparatus according to claim 14, **characterised in that** the means (17) for housing the adhesive are supported in a removable way by the adhesive distribution means supporting frame (19).

16. The apparatus according to any of the foregoing claims from 11 to 15, **characterised in that** the adhesive distribution means comprise an adhesive pick-up roller (162) which takes the adhesive from the means for housing the adhesive (171).

17. The apparatus according to any of the foregoing claims from 11 to 16, **characterised in that** the adhesive distribution roller (161) is not as wide as the sheet of material (11).

18. The apparatus according to any of the foregoing claims from 4 to 17, **characterised in that** it comprises feed means (14) comprising a rotary suction belt (141).

19. The apparatus according to claim 18, **characterised in that** the suction belt (141) forms means for pushing the sheet of material (11) against the adhesive distribution means (161).

20. The apparatus according to claim 18 or 19,
**characterised in that** the suction belt (141) can move between a position in which the sheet of material is not engaged against the distribution means (161) with the sheet of material moving forwards freely, and a position in which the sheet of material abuts the adhesive distribution means (161).

21. The apparatus according to any of the foregoing claims, **characterised in that** it comprises means (191) for detaching the sheet of material from the adhesive distribution means.

22. The apparatus according to claim 21, **characterised in that** the means for detaching the adhesive comprise a plurality of longitudinal prongs (191) which engage with the sheet of material (11) downstream of the distribution roller (161).

23. The apparatus according to any of the foregoing claims, **characterised in that** it comprises means (30, 40) designed to keep the glued sheets (15) of photographic material under pressure.

24. The apparatus according to claim 23, **characterised in that** the means designed to keep the sheets (11, 11) compressed comprise means (40) designed to compress the front edge, or rear edge (111') of the sheets of material (11).

25. The apparatus according to claim 23 or 24,
**characterised in that** the means (30) for keeping the sheets (11, 11) compressed comprise means designed to compress the rear edge, or free edge (111") of the sheets of material (11).

26. The apparatus according to any of the foregoing claims from 23 to 25, **characterised in that** the means for keeping the sheets (11, 11) compressed disengage from the sheets (11) when the housing means (20) are raised towards the compression means (181).

27. The apparatus according to any of the foregoing claims, **characterised in that** it comprises means for compressing a face of a sheet of material (11) against an opposite face of a respective sheet of material, said means comprising a second compression roller (281) which is opposite the first roller (181) in such a way that respective sheets of material are gripped between them.

28. The apparatus according to any of the foregoing claims, **characterised in that** it comprises second feed means for a second sheet of photographic material.

29. The apparatus according to claim 28, **characterised in that** the second feed means for a second sheet of photographic material comprise a first and a second plurality of opposite rollers (214, 215) between which the respective sheet is conveyed and forming a path towards a pair of compression rollers (181, 281).

30. The apparatus according to any of the foregoing claims, **characterised in that** it comprises means (301) for controlling the action to retain the sheet of photographic material.

31. The apparatus according to claim 30, **characterised in that** the means (301) for controlling the retaining action are designed to modulate the retaining force applied to the sheet (11) according to the size of the sheet (11).

32. The apparatus according to claim 30 or 31,
**characterised in that** the means (301) for controlling the action to retain the sheet of photographic material are in the form of means designed to control the suction supplied by the suction means (141).

33. The apparatus according to claim 32, **characterised in that** the means (301) for controlling the suction are designed to reduce the suction to a low value which is such that the sheet (11) can slide on the suction belt (141).

34. The apparatus according to any of the foregoing claims from 24 to 33, **characterised in that** the means for keeping the sheets (11) compressed at the front edge (111') of the glued sheets (15) comprise motor-driven actuator means for the presser (41).

35. The apparatus according to any of the foregoing claims from 24 to 34, **characterised in that** the means for keeping the sheets (11) compressed at the front edge (111') of the glued sheets (15) are designed to keep the pressure on the front edge of the block (15) along the carriage (20) feed path.

36. The apparatus according to any of the foregoing claims from 24 to 35, **characterised in that** the means designed to keep the sheets (11) compressed at the front edge (111') of the glued sheets (15) comprise actuator means comprising cam means (145), having a length (L) corresponding to the maximum length allowed for the photograph album.

37. The apparatus according to any of the foregoing claims from 16 to 36, **characterised in that** it comprises means (164, 164) designed to eliminate any excess build up of adhesive at the lateral portions (162b, 162c) of the adhesive pick-up roller (162).
